# EUROPEAN PATENT APPLICATION

(11) **EP 2 674 905 A1**
(43) Date of publication of application: **18.12.2013**
(21) Application number: 12870327.9
(22) Date of filing: 23.03.2012
(51) Int. Cl.: G06Q 30/06, H04W 4/00

(54) **METHOD FOR PROVIDING DISTRIBUTION MARKET SHOPPING SERVICE USING REMOTE DIRECT CONTROL ON HOME SCREEN WALLPAPER OF SMART TERMINAL, AND COMPUTER-READABLE RECORDING MEDIUM HAVING HOME SCREEN WALLPAPER SHOPPING PROGRAM RECORDED THEREON USING SAME**

(30) Priority: 22.03.2012 KR 20120029607
(71) Applicant: An, Chongoh, Seoul 137-814 (KR)
(72) Inventor: An, Chongoh, Seoul 137-814 (KR)
(74) Representative: Regimbeau
(86) International application number: PCT/KR2012/002150
(87) International publication number: WO 2013/141423

(57) **Abstract**

There is provided a technique of providing a retail store shopping service on a home screen installed in various smart terminals including an android smart phone by allowing a remote server to directly control at least a portion of the home screen. In particular, there is provided a method for providing a retail store shopping service, whereby a direct control channel is formed with a retailer server of a remote area with respect to a home screen of a smart terminal through widget, or the like, and the retailer server directly controls at least a portion of the home screen, and a computer-readable recording medium storing a home screen shopping program for the method.

## Description

### BACKGROUND OF THE INVENTION

### 1. Field of the Invention

The present disclosure relates to a technique of providing a retail store shopping service on a home screen installed in various smart terminals including an android smart phone by allowing a remote server to directly control at least a portion of the home screen. In particular, the present invention relates to a method for providing a retail store shopping service, whereby a direct control channel is formed with a retailer server of a remote area with respect to a home screen of a smart terminal through widget, or the like, and the retailer server directly controls at least a portion of the home screen, and a computer-readable recording medium storing a home screen shopping program for the method.

### 2. Background of the Invention

Currently, a variety of smart terminals including smart phones (e.g., iPhone of Apple corporation, Galaxy S of Samsung Electronics Co., Ltd., or the like) and smart pad (e.g., iPad of Apple corporation, Galaxy tab of Samsung Electronics Co., Ltd., or the like) have propagated explosively. In particular, as Google provides an android platform as open standards through open handset alliance (OHA), propagation of smart terminals is anticipated to extend further in the future.

Referring to a user interface (UI) of a smart terminal, a home screen is basically provided and a user may install an application as desired. Also, an installed application may be deleted arbitrarily.

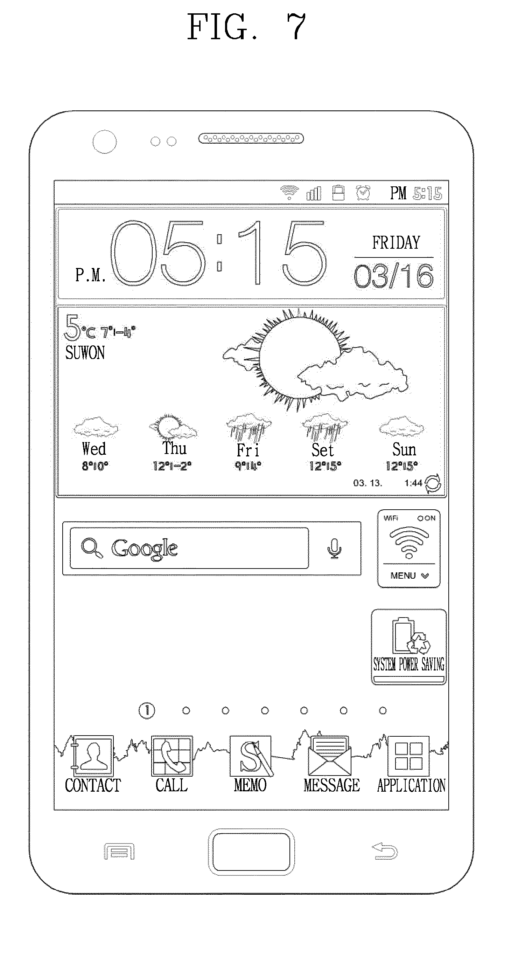

An android platform will be described as an example. FIG. 7 is a view illustrating a home screen, a type of idle screen of an android smart phone. In an android platform, a home screen is provided as an idle screen, and when a home button installed in a smart terminal is pressed, a home screen as illustrated in FIG. 7 is displayed as a start screen. Various widgets are installed in the home screen, and such a widget may be added or deleted as desired by a user. In FIG. 7, a time widget, a weather widget, a search widget, a wireless LAN widget, and a power management widget are displayed on the home screen, and besides, widgets such as a scheduler, a message, or the like, provided by a smart terminal manufacturer may be used for the purpose of a home screen.

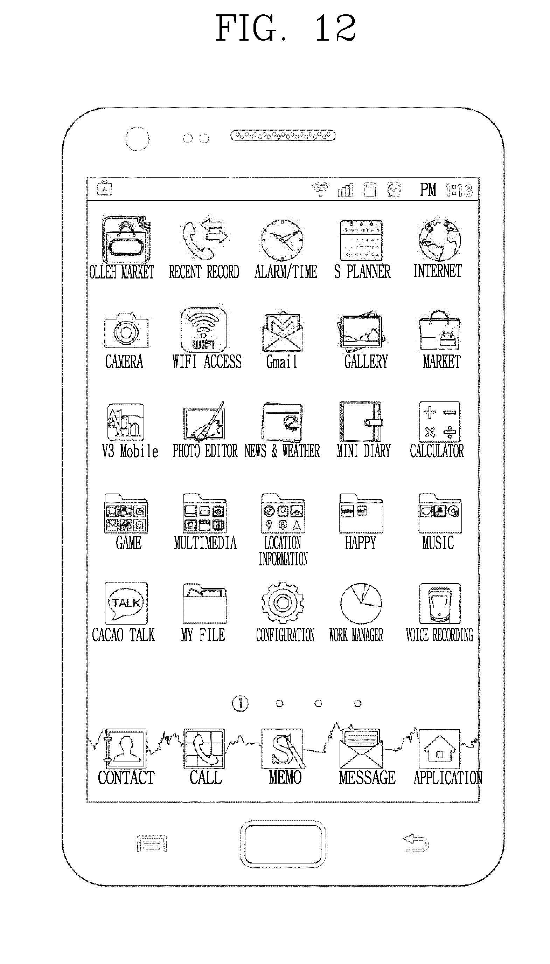

In a smart terminal, various applications may be installed or an installed application may be deleted as a user wants to. In an android smart phone, application installation/deletion may be performed by pressing an 'application' button in a lower end in FIG. 7. FIG. 12 shows a smart phone UI screen displayed when the application button is pressed in the android smart phone. When a 'market' icon in the UI is pressed, a screen allowing a new application to be installed appears. In case of deleting an already installed application, when an icon of a corresponding application is touched for a long period of time, a deletion menu appears.

Conventionally, attainment of Internet commerce by using a smart terminal, in particular, a smart phone, on the basis of an existing Internet shopping mall operator, has been attempted, and to this end, Internet shopping mall operators have distributed Internet shopping application. For example, eBay Auction, G Market, Lotteria, Interpark, Hyundai Hmall, Hello Market, and the like, are applications distributed for the foregoing purpose. When a user installs an application provided by an Internet shopping mall in his smart terminal, the user may attain a business transaction such as Internet shopping, or the like, through the application, but to this end, the user must positively search an android market for a corresponding application, personally install it in the smart terminal, and directly drive a corresponding application icon to use the application. Thus, although multiple internet shopping applications have been released but have been rarely used.

Meanwhile, as mentioned above, a home screen of a smart terminal has been simply used for the purpose of installing a widget by a user, without attempting to utilize the region for the business purpose particularly. Namely, a home screen, easily accessed by a user, has high utilization possibility but it does not because a home screen is generally regarded as a space a user may arbitrarily use. In particular, an application program and a home screen are technically separated and the control of a home screen may make a user feel that a utilization value of a smart terminal is remarkably reduced, and for this reason, a home screen has been excluded from utilization in terms of the business purpose.

Thus, the development of a technique which may not degrade user satisfaction, while effectively utilizing a smart terminal for a business purpose such as Internet shopping, is urgently required.

### SUMMARY OF THE INVENTION

Therefore, an aspect of the detailed description is to provide a technique of providing a retail store shopping service on a home screen installed in various smart terminals including an android smart phone by allowing a remote server to directly control at least a portion of the home screen. In particular, the present invention provides a method for providing a retail store shopping service, whereby a direct control channel is formed with a retailer server of a remote area with respect to a home screen of a smart terminal through widget, or the like, and the retailer server directly controls at least a portion of the home screen, and a computer-readable recording medium storing a home screen shopping program for the method.

To achieve these and other advantages and in accordance with the purpose of this specification, as embodied and broadly described herein, a method for providing a retail store shopping service by using remote direct control of a retailer server connected to a smart terminal through a communication network with respect to a home screen of the smart terminal, includes: displaying, by the smart terminal, a home screen including a plurality of pages; reserving, by the smart terminal, at least some pages of the home screen as a direct control screen of the retailer server; driving, by the smart terminal, a background generating module for the reserved direct control screen; generating, by the background generating module, a direct control channel with the retailer server through the communication network; forming, by the retailer server, a shopping screen with respect to the direct control screen of the home screen through the direct control channel; detecting, by the retailer server, a user manipulation performed on the shopping screen formed on the direct control screen, and providing a shopping screen according to the detected user manipulation; and when a request for changing some pages of the reserved direct control screen is received through a user's touch manipulation on the home screen, rejecting, by the background generating module, the change request.

The background generating module may include a plurality of sub-modules allocated to respective pages of the direct control screen, wherein the method may further include: when a sub-module detects that a page of the direct control screen allocated thereto is displayed in the smart terminal, changing from background processing into foreground processing and requesting a shopping screen with respect to the page of the direct control screen allocated to the sub-module from the retailer server; and providing, by the retailer server, the shopping screen with respect to the page of the direct control screen allocated to the sub-module in response to the request from the sub-module.

The method may further include: receiving, by the background generating module, data of the shopping screen with respect to each page of the direct control screen from the retailer server through background processing while the direct control screen is not being displayed; and when displaying of the direct control screen is detected, changing into foreground processing and forming, by the background generating module, a shopping screen of the direct control screen by using the previously received data of the shopping screen.

The direct control screen may include a plurality of pages, and the retailer server may form shopping screens of the pages such that they are linked to a pre-set particular retail store and matched to a shopping configuration of each floor of the particular retail store. Also, among the plurality of pages constituting the home screen, pages starting from a second page, excluding a first page, may be allocated to the direct control screen. Also, the background generating module includes a plurality of widgets allocated to each page of the direct control screen.

The method may further include: obtaining, by the retailer server, user information of the smart terminal; extracting, by the retailer server, interested goods/store information previously registered such that it is matched to the user information, from a database server; and forming, by the retailer server, the shopping screen by using the extracted interested goods/store information.

The method may further include:, extracting, by the retailer server, direct marketing (DM) information matched to the user information from the database server; and forming, by the retailer server, the shopping screen by using the extracted DM information.

According to embodiments of the present invention, a smart terminal such as a smart phone or a smart pad is effectively utilized for the business purpose such as the Internet shopping, while user satisfaction with respect to a screen frequently used by a user is not degraded, whereby retailer and user satisfaction can be maximized.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a view illustrating an overall system configuration implemented according to an embodiment of the present invention.
FIG. 2 is a view illustrating a detailed configuration of a smart phone.
FIG. 3 is a view illustrating a detailed configuration of a retailer server.
FIG. 4 is a flow chart illustrating a process performed by a smart phone according to a first embodiment of the present invention.
FIG. 5 is a flow chart illustrating a process performed by a retailer server according to an embodiment of the present invention.
FIG. 6 is a flow chart illustrating a process performed by a smart phone according to a second embodiment of the present invention.
FIG. 7 is a view illustrating an example of a home screen of an android smart phone.
FIGS. 8 through 10 are views illustrating shopping screens of respective floors of a retail store implemented as a home screen according to a second embodiment of the present invention.
FIG. 11 is a view illustrating an event screen of a retail store implemented as a home screen according to a second embodiment of the present invention.
FIG. 12 is a view illustrating a user interface (UI) screen when an application button of a home screen is pressed in an android smart phone.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

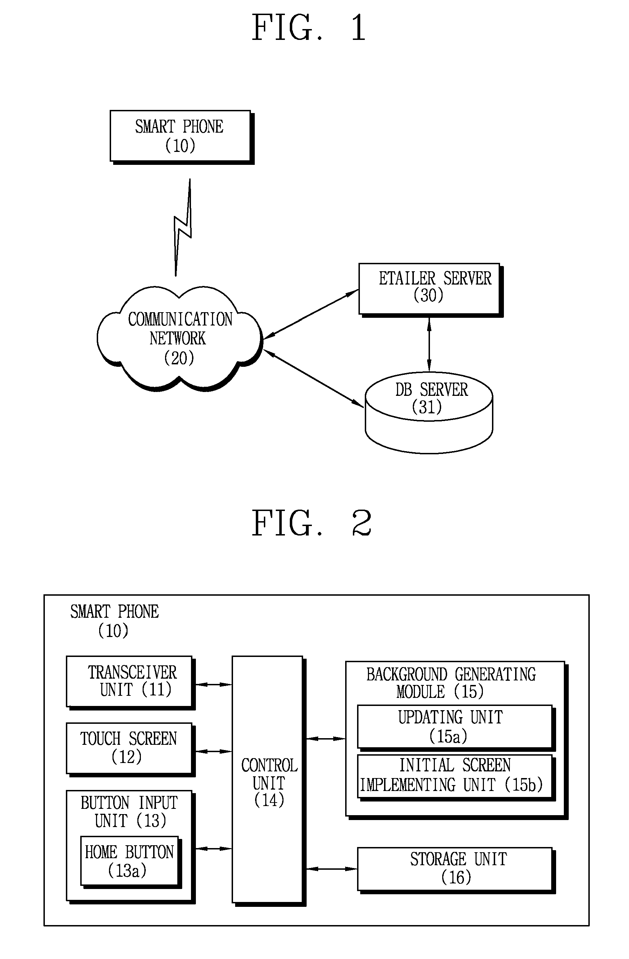

FIG. 1 is a view illustrating an overall system configuration implemented according to an embodiment of the present invention. Referring to FIG. 1, an overall system implemented according to an embodiment of the present invention includes a smart phone 10 a communication network 20, and a retailer server 30.

First, the smart phone 10 according to an embodiment of the present invention is, for example, a smart terminal based on an android platform, having characteristics that a home screen is displayed when system operation power is turned on or a home button 13a is pressed. In a user interface (UI) screen illustrated in FIG. 7, when an 'application' button in a lower end of the home screen is selected, various application icons installed in the smart phone 10 are displayed.

The retailer server 30 is equipment connected to a particular retail store previously set to provide a shopping service to a home screen according to an embodiment of the present invention. The retailer server 30 retains information for selling various types of goods (merchandise or services) handled in the corresponding retail store, and provides the corresponding information to the home screen according to an embodiment of the present invention. The retailer server 30 interworks with a database (DB) server 31 in order to manage goods information, user information, and the like, in order to provide a shopping service. The retailer server 30 is connected to the smart phone 10 through the communication network 20 configured as various types of wired/wireless networks. Preferably, the communication network 20 includes a 3G mobile communication data network and a long term evolution (LTE) network, and besides, various communication techniques may be employed.

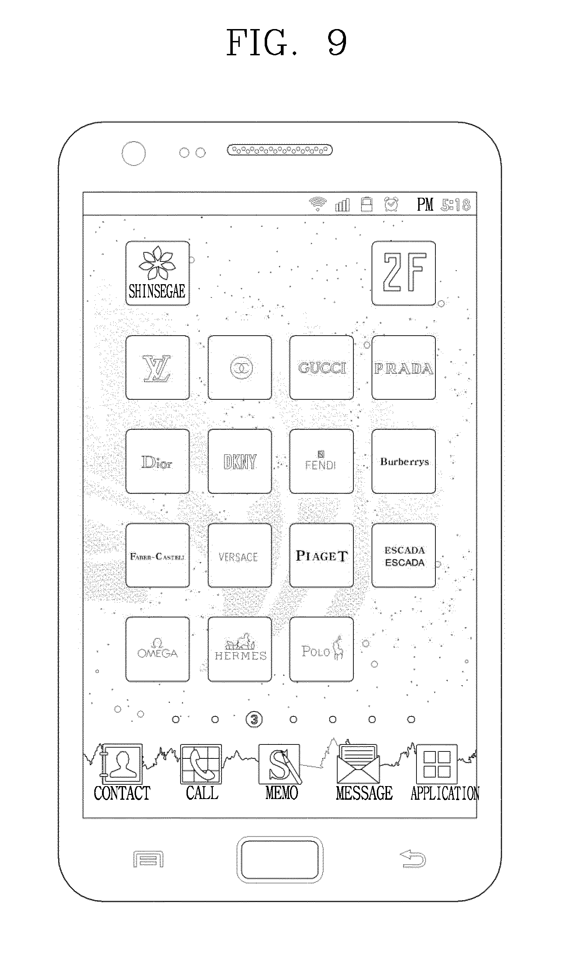

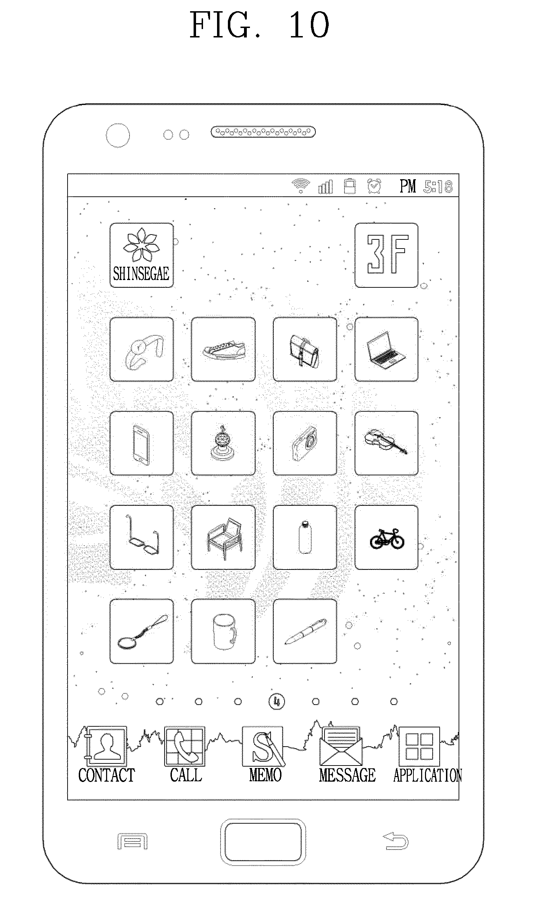

FIG. 2 is a view illustrating a configuration of the smart phone 10 appropriate for applying the technical concept of the present invention, and FIGS. 7 through 12 are views illustrating a UI screen implemented in a touch screen 12 of the smart phone 10.

First, referring to FIG. 2, the smart phone 10 includes a transceiver unit 11, a touch screen 12, a button input unit 13, a control unit 14, a background generating module 15, and a storage unit 16. The button input unit 13 includes a home button 13a for calling a home screen, and the background generating module 15 includes an updating unit 15a and an initial screen implementing unit 15b. First, the smart phone 10 according to an embodiment of the present invention will be described in detail on the basis of a configuration of the background generating module 15.

In an embodiment of the present invention, preferably, the background generating module 15 is configured as a background generating component installed for a home screen at the time when the smart phone 10 is released, so that a user does not need to install an application separately. An example of the background generating component may be a widget, and the retailer server 30 directly establishes a control channel with a widget to push data in relation to various shopping services. Hereinafter, two embodiments of a method for pushing data with the background generating component by the retailer server 30 will be described. Here, the background generating component is not limited to a widget and may be variously implemented, including a script.

### <First embodiment>

The updating unit 15a determines whether an initial home screen has been completely implemented on the touch screen 12 when power of the smart phone 10 is turned on by the control unit 14. When the implementation of the initial home screen is completed, the updating unit 15a receives a background processing execution request from the control unit 14, requesting the updating unit 15a to execute background processing.

Accordingly, the updating unit 15a transmits a shopping screen provision request to the retailer server 30 through the communication network 20 at predetermined periods (or periodically). Namely, the updating unit 15a, operating in a background processing manner, controls the transceiver unit 11 to receive user-specified shopping screen data through the communication network 20 from the retailer server 30, and subsequently, preferably, the updating unit 15a stores the user-specified shopping screen data in the storage unit 16, thus performing updating on shopping screen data in advance.

Preferably, the updating unit 15a receives and stores update data in advance during a time slot (e.g., for the wee hours) anticipated to be relatively idle according to a pre-set schedule. Namely, the updating unit 15a receives the update data as a background in advance. Thereafter, when a widget implementing a home screen is activated in the smart phone 10, the updating unit 15a detects it and reflects the previously performed updating in a screen. When a home screen is requested by the user through the home button 13a, the initial screen implementing unit 15b changes the background processing into foreground processing to thereby implement the updated home screen through widget.

Here, changing of the background generating module 15 from the background processing to the foreground processing corresponds to widget activation. In a first embodiment, since user-specified shopping screen data is continuously received in the background processing, a user, who has leeway for packets based on each rate system, has no problem although a large amount of packets are exhausted in the smart phone. Optionally, a retailer operating the retailer server 10 may bear relevant packet expenses and the relevant packet expenses may be paid by accumulating purchase points.

The initial screen implementing unit 15b implements the user-specified shopping screen data, which has been updated in the storage unit 16, as a home screen on the touch screen 12. Meanwhile, a maximum number of home screens is 7 according to a current standard of the android platform. Among the seven home screens, six ones, excluding an initial home screen, are utilized for the purpose of shopping with respect to goods through the user-specified shopping screen data provided by the retailer server 10, and this is the same in a second embodiment described hereinafter.

### <Second embodiment>

When implementation of an initial home screen on the touch screen 12 is completed as power of the smart phone 10 is turned on by the control unit 14, the updating unit 15a implements the initial home screen on the touch screen 12.

When an execution request is provided from the control unit 14, the updating unit 15a activates a widget through foreground processing and subsequently transmits a shopping screen provision request together with an identification (ID) of the smart phone 10 to the retailer server 30. Thereafter, the updating unit 15a receives the user-specified shopping screen data through the communication network 20 from the retailer server 30 and stores the shopping screen data in the storage unit 16, thus completing updating on the shopping screen data.

Unlike the first embodiment, in the second embodiment, pushing the shopping screen data is initiated after a widget is activated. In the first embodiment, when data is pushed while the widget is in a background state, a processing load of the smart phone 10 is too large and, in particular, the number of packets is increased to incur an excessive data communication charge (or rate). Thus, preferably, the selective option with respect to the second embodiment is provided.

In an embodiment of the present invention, a direct control screen may include a plurality of pages. Preferably, a widget (a sub-module) is separately allocated to each page, and when any one of the plurality of pages is entered by a user, a corresponding widget is activated and a widget of a previous page is deactivated. When a widget is activated, data pushing starts, so there may be a slight delay in every page movement.

When a home screen request from the user through the home button 13a is received, the initial image implementing unit 15b implements the user-specified shopping screen data, which has been updated in the storage unit 16, on a home screen of the touch screen 12. Thereafter, when the user requests a movement to any one of a plurality of pages constituting the user-specified shopping screen data, the initial image implementing unit 15b controls the transceiver unit 11 to receive updated information corresponding to the moved page (i.e., a current page resulting from the movement) from the retailer server 30 through the communication network 20 and implements the same on the home screen.

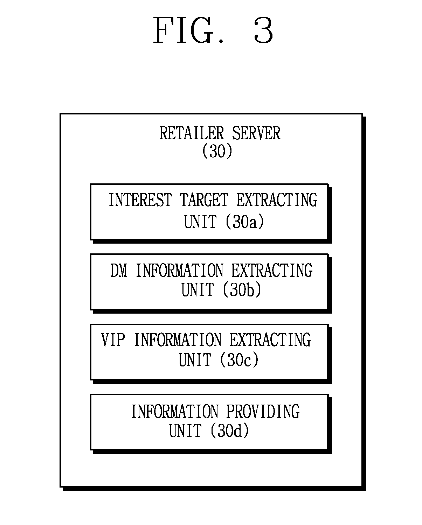

Meanwhile, FIG. 3 is a view illustrating a configuration of the retailer server 30 for implementing the present embodiment. When a request for providing a shopping screen (or a shopping screen provision request), together with an ID, is received from the foregoing updating unit 15a, the retailer server 30 provides shopping screen data specified for the user of the smart phone 10, preferably. To this end, the retailer server 30 includes an interest target extracting unit 30a, a direct marketing (DM) information extracting unit 30b, a VIP information extracting unit 30c, and an information synthesizing unit 30d.

When the shopping screen provision request, together with the ID of the smart phone 10, is received from the background generating module 15 through the communication network 20, the interest target extracting unit 30a identifies the received ID and checks user information of the smart phone 10 in the DB server 31. Thereafter, the interest target extracting unit 30a extracts interested goods or interested store information, which has been matched to the checked user information and registered in advance, from the DB server 31.

The DM information extracting unit 30b determines whether or not DM information specified for the user information exists by referring to the DB server 31, and when DM information specified for the user information exists, the DM information extracting unit 30b extracts the DM information.

The VIP information extracting unit 30c determines whether the user of the smart phone 10 is a VIP member through the user information by referring to the DB server 31. When the user of the smart phone 10 is a VIP member, the VIP information extracting unit 30c extracts information regarding particular premium goods or information regarding a store having particular premium goods from the DB server 31.

The information providing unit 30d generates shopping screen data specified for the user of the smart phone 10 and including one or more of information regarding previously registered interested goods/store extracted by the interest target extracting unit 30a, DM information extracted by the DM information extracting unit 30b, information regarding particular premium goods or information regarding a store having particular premium goods extracted by the VIP information extracting unit 30c, and information regarding goods desired to be sold by a retailer through the retailer server 30, and transmits the generated user-specified shopping screen data to the smart phone 10 through the communication network 20.

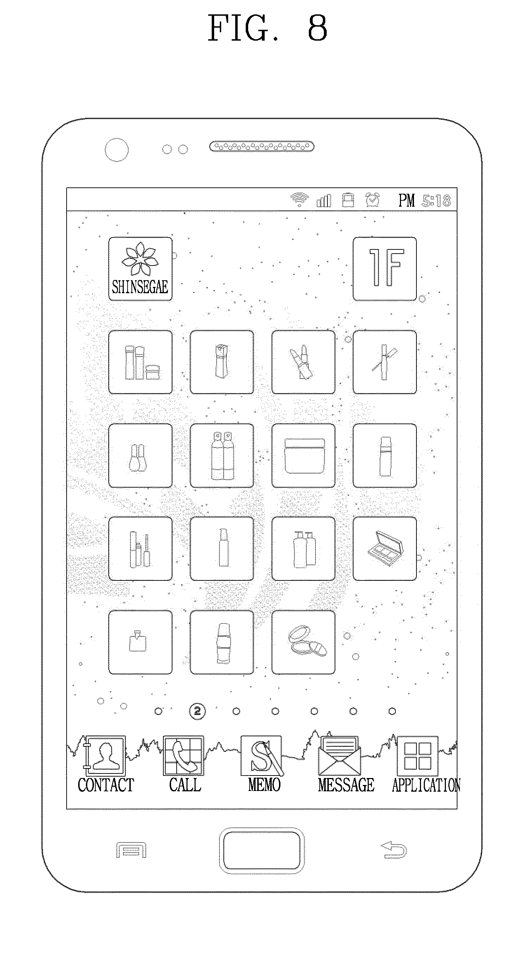

In an embodiment of the present invention, the smart phone 10 includes a home screen including several pages, and at least some of the pages are directly controlled by the retailer server 30 in a remote area. Preferably, a first page (please see FIG. 7) of the home screen is frequently used by the user at ordinary times, so the first page is reserved in a user control region as in the related art in order to maintain convenience thereof, and the other pages (please see FIGS. 8 through 11), starting from a second page, are allocated to a so-called 'direct control screen' directly controlled by the retailer server 30.

Also, the direct control screen is a region directly controlled by the retailer server 30 and a request for changing at least a portion of the region according to a user's touch manipulation is rejected. Namely, a user's touch manipulation (e.g., manipulation in relation to checking content of each page, purchase of goods, payment, and the like) within a category previously admitted or recognized for the purpose of shopping is processed validly, but a manipulation such as deletion, movement, or the like, with respect to a particular item in at least a partial region, preferably, the entirety, of the direct control screen, is rejected. Thus, the direct control screen is a region directly controlled by the retailer server 30 in a remote area, rather than a region controlled by the user.

In this manner, the retailer operating the retailer server 30 by using the user-specified shopping screen data formed by a plurality of pages designs the home screen with goods desired to be sold, whereby goods of the retailer may be sold. For example, when the user turns on the smart phone 10 in the morning, a goods selling screen as designed by the corresponding retailer on the day may appear. Also, goods guidance, event guidance, coupons, and the like, corresponding to DM information designed to be specified for the user of the smart phone 10 may be provided.

Also, when the user of the smart phone 10 is a VIP member, a premium service may be provided through the direct control screen. For example, when information regarding a certain type of goods (e.g., a table for six, a 3D television of 50 inches or greater) is requested through, for example, a call, the retailer server 30 may design an appropriate goods purchase page and display the same on the direct control screen of the home screen. In this case, preferably, the retailer server 30 may have a payment system to allow for purchasing on the home screen.

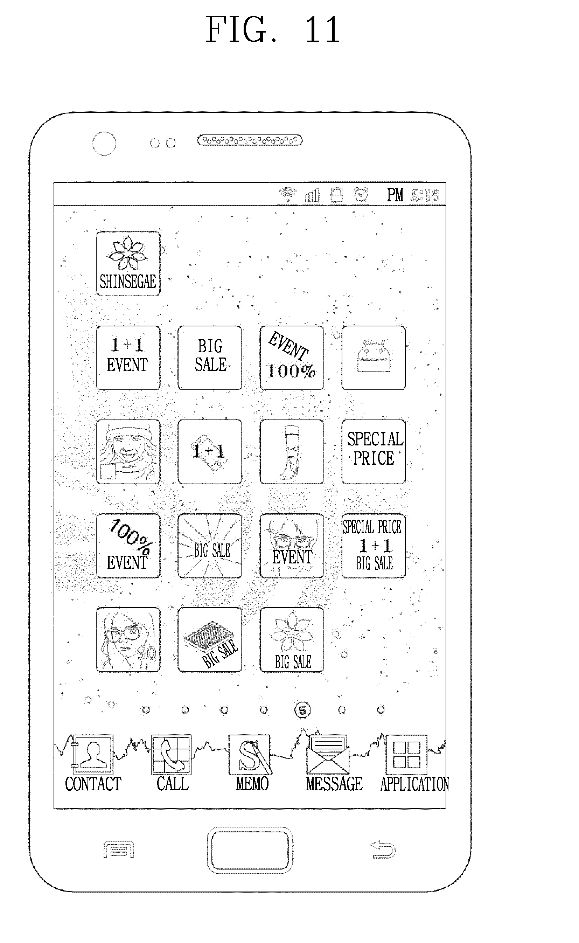

Also, since the shopping screen data provided by the retailer server 30 includes a plurality of pages, goods or stores may be arranged according to particular themes or user preference in each page. Namely, referring to FIGS. 8 through 10, respective pages of the direct control screen may be configured to correspond to first, second third floors of the Shinsegae department store. Preferably, an event page may be formed in an additional separate page (please see FIG. 11), and in this case, the event page may be designed by reflecting user information.

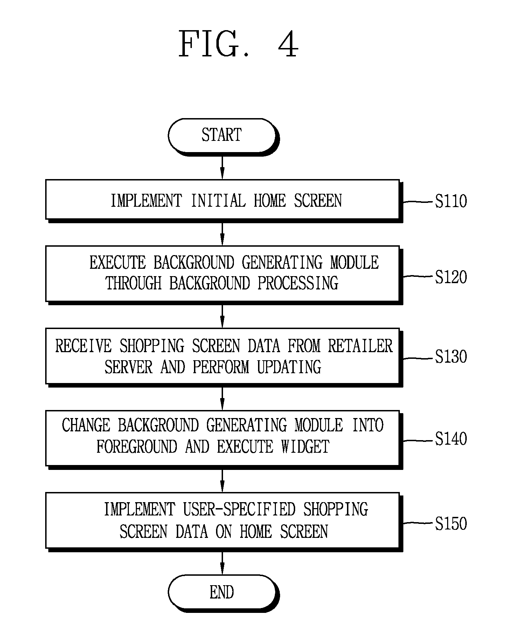

FIG. 4 is a flow chart illustrating a process performed in the smart phone 10 according to a first embodiment of the present invention. Referring to FIGS. 1 through 4, first, when system operation power of the smart phone 10 is turned on, the control unit 14 implements (or displays) an initial home screen on the touch screen 12 (S110).

After the step S110, the control unit 14 executes the background generating module 15 through background processing (S120).

In the step S120, the background generating module 15 transmits a shopping screen provision request to the retailer server 30 through the communication network 20 at pre-set periods. Preferably, in order to receive user-specified information, the background generating module 15 transmits an ID of the smart phone 10 together. When the retailer server 30 provides user-specified shopping screen data in response to the shopping screen provision request, the background generating module 15 receives the shopping screen data and stores it in the storage unit 16. Through this process, the background generating module 15 performs updating on the shopping screen data.

After the step S130, when a request for a home screen by using the home button 13a is received from the user, the background generating module 15 changes the background processing into foreground processing to implement a widget on the home screen (S140).

After the step S140, the background generating module 15 implements the user-specified shopping screen data, which has been updated in the storage unit 16 in step S130, through the widget of the touch screen 12 (S150).

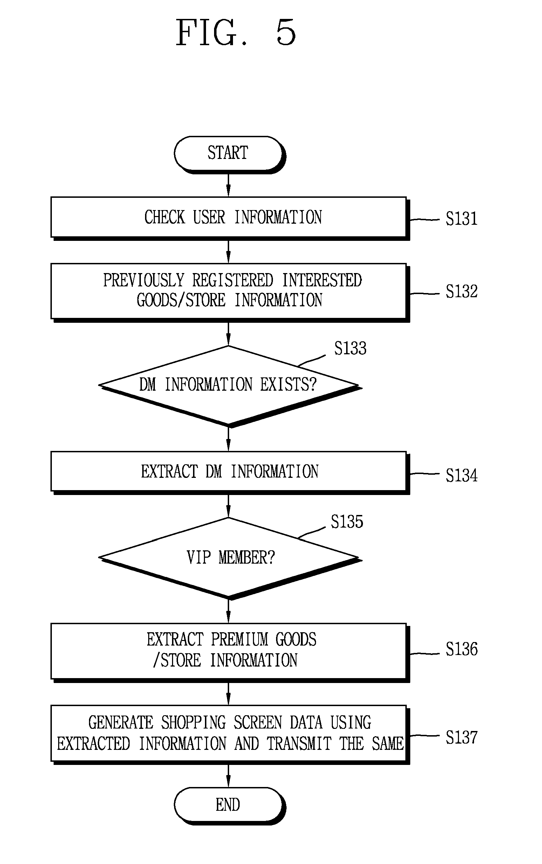

FIG. 5 is a flow chart illustrating a process performed in the retailer server 30 in step S130 of FIG. 4. Referring to FIGS. 1 through 5, the retailer server 30 receives a shopping screen provision request, together with an ID of the smart phone 10, from the background generating module 15 of the smart phone 10 through the communication network 20, and when the received ID is identified, the retailer server 30 checks user information of the smart phone 10 in the DB server 31 (S131).

After the step S131, the retailer server 30 extracts interested goods/store information, which has been registered such that it is matched to user information of an individual user, from the DB sever 31 (S132). In order to maximize efficiency of goods selling, a retail store classifies information regarding interested goods or interested store of each client and stores the same as a DB, and such information is utilized in step S132.

After the step S132, the retailer server 30 determines whether there is DM information specified for user information (S133).

When there is DM information specified for user information according to the determination results in step S133, the retailer server 30 extracts the DM information (S134). On the other hand, when there is no DM information specified for the user information according to the determination results of step S133, the retailer server 30 performs step S135, without extracting DM information.

After step S134, the retailer server 30 determines whether the user of the smart phone 10 is a VIP member on the basis of the user information of the smart phone 10 checked in step S131, by referring to the DB server 31 (S135).

When the user of the smart phone 10 is a VIP member according to the determination results in step S135, the retailer server 30 extracts information regarding particular premium goods or information regarding a store having particular premium goods from the DB server 31 (S136). Meanwhile, when the user of the smart phone 10 is not a VIP member according to the determination results in step S136, step S137 is performed, without extracting information regarding particular premium goods or information regarding a store having particular premium goods.

After step S136, the retailer server 30 generates shopping screen data specified for the user of the smart phone 10, by including one or more of the previously registered interested goods/store information extracted in step S132, DM information extracted in step S134, information regarding the particular premium goods/store extracted in step S136, and information regarding goods desired to be sold through the retailer server 30, and transmits the generated user-specified shopping screen data to the smart phone 10 through the communication network 20 (S137).

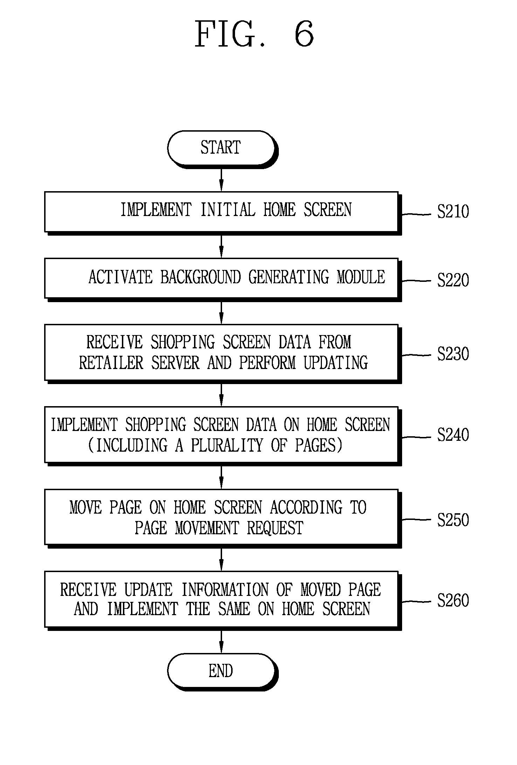

FIG. 6 is a flow chart illustrating a process performed in the smart phone 10 according to a second embodiment of the present invention. Referring to FIGS. 1 thorough 6, first, when system operation power of the smart phone 10 is turned on, the control unit 14 implements (or displays) an initial home screen on the touch screen 12 (S210).

After step S21 0, the control unit 14 activates the background generating module 15 through foreground processing (S220).

In step S220, the background generating module 15 transmits a shopping screen provision request to the retailer server 30 through the communication network 20. In this case, preferably, in order to receive user-specified information, the background generating module 15 transmits an ID of the smart phone 10 together. In response to the shopping screen provision request, when the retailer server 30 provides shopping screen data specified for the corresponding user, the background generating module 15 receives the shopping screen data and stores the same in the storage unit 16. Through this process, the background generating module 15 performs updating on the shopping screen data (S230).

After step S230, when a request for a home screen is received from the user through manipulation of the home button 13a, the background generating module 15 implements shopping screen data, which has been updated in the storage unit 16 in step S230, as a home screen on the touch screen 12 (S240).

After step S240, according to a user's request for movement to any one of a plurality of pages constituting the user-specified shopping screen data, the background generating module 15 moves to the corresponding page on the home screen (S250).

After step S250, updated information corresponding to the moved page on the home screen is received from the retailer server 30 through the communication network 20 and immediately implements the received information on the home screen.

Meanwhile, unlike step S130 of FIG. 4, in step S240 of FIG. 6, pushing of the shopping screen data starts (or is executed) after a widget is activated. Namely, in step S130 of FIG. 4, when data is pushed while the widget is in a background state, the amount of processing is increased and the number of packets is also increased to increase a charge. In an embodiment of the present invention, when the shopping screen data includes a plurality of pages, preferably, a widget is allocated to each page and when each page is entered, the corresponding widget is activated and a widget of a previous page is deactivated. Namely, when a widget corresponding to each page is activated, data pushing may start accordingly and there may be a slight delay according to a page movement.

The present invention may be implemented as a code that can be read by a computer in a computer-readable recording medium. In this case, the computer-readable recording medium includes any type of recording device in which data that can be read by a computer system is stored.

The computer-readable recording medium includes a ROM, a RAM, a CD-ROM, a magnetic tape, a floppy disk, a hard disk, an optical data storage device, and the like, and includes a unit implemented in the form of carrier waves (e.g., transmission through the Internet). Also, codes which are distributed in computer devices connected by a network and can be read by a computer in a distributed manner are stored and executed in the computer-readable recording medium. Also, functional programs, codes, code segments for implementing the present invention may be easily inferred by programmers in the art to which the present invention pertains.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A method for providing a retail store shopping service by using remote direct control of a retailer server connected to a smart terminal through a communication network with respect to a home screen of the smart terminal, the method comprising:
displaying, by the smart terminal, a home screen including a plurality of pages;
reserving, by the smart terminal, at least some pages of the home screen as a direct control screen of the retailer server;
driving, by the smart terminal, a background generating module for the reserved direct control screen;
generating, by the background generating module, a direct control channel with the retailer server through the communication network;
forming, by the retailer server, a shopping screen with respect to the direct control screen of the home screen through the direct control channel;
detecting, by the retailer server, a user manipulation performed on the shopping screen formed on the direct control screen, and providing a shopping screen according to the detected user manipulation; and
when a request for changing some pages of the reserved direct control screen is received through a user's touch manipulation on the home screen, rejecting, by the background generating module, the change request.

2. The method of claim 1, wherein the background generating module includes a plurality of sub-modules allocated to respective pages of the direct control screen,
wherein the method further comprising:
when a sub-module detects that a page of the direct control screen allocated thereto is displayed in the smart terminal, changing from background processing into foreground processing and requesting a shopping screen with respect to the page of the direct control screen allocated to the sub-module from the retailer server; and
providing, by the retailer server, the shopping screen with respect to the page of the direct control screen allocated to the sub-module in response to the request from the sub-module.

3. The method of claim 1, further comprising:
receiving, by the background generating module, data of the shopping screen with respect to each page of the direct control screen from the retailer server through background processing while the direct control screen is not being displayed; and
when displaying of the direct control screen is detected, changing into foreground processing and forming, by the background generating module, a shopping screen of the direct control screen by using the previously received data of the shopping screen.

4. The method of claim 1, wherein the direct control screen includes a plurality of pages, and the retailer server forms shopping screens of the pages such that they are linked to a pre-set particular retail store and matched to a shopping configuration of each floor of the particular retail store.

5. The method of claim 5, wherein among the plurality of pages constituting the home screen, pages starting from a second page, excluding a first page, are allocated to the direct control screen.

6. The method of claim 2, wherein the background generating module includes a plurality of widgets allocated to each page of the direct control screen.

7. The method of claim 1, further comprising:
obtaining, by the retailer server, user information of the smart terminal;
extracting, by the retailer server, interested goods/store information previously registered such that it is matched to the user information, from a database server; and
forming, by the retailer server, the shopping screen by using the extracted interested goods/store information.

8. The method of claim 7, further comprising:
extracting, by the retailer server, direct marketing (DM) information matched to the user information from the database server; and
forming, by the retailer server, the shopping screen by using the extracted DM information.

9. A computer-readable recording medium storing a home screen shopping program for performing the method for providing a retail store shopping service according to any one of claim 1 to claim 8.
